(19) Europäisches Patentamt
European Patent Office
Office européen des brevets

(11) Veröffentlichungsnummer: **0 024 589**
**A2**

(12) # EUROPÄISCHE PATENTANMELDUNG

(21) Anmeldenummer: **80104631.9**

(22) Anmeldetag: **06.08.80**

(51) Int. Cl.$^3$: **G 01 F 23/10**
G 01 K 11/24, G 01 S 15/08

(30) Priorität: **09.08.79 DE 2932243**

(43) Veröffentlichungstag der Anmeldung:
**11.03.81 Patentblatt 81/10**

(84) Benannte Vertragsstaaten:
**AT BE CH FR GB IT LI LU NL SE**

(71) Anmelder: **Rapp, Eugen**
**Tilsiter Strasse 12**
**D-2805 Stuhr II(DE)**

(72) Erfinder: **Rapp, Eugen**
**Tilsiter Strasse 12**
**D-2805 Stuhr II(DE)**

(74) Vertreter: **Eisenführ & Speiser**
**Eduard-Grunow-Strasse 27**
**D-2800 Bremen 1(DE)**

(54) **Längen- und Temperaturmessgerät, insbesondere für Tankanlagen od. dgl.**

(57) Ein Längen- und Temperaturmeßgerät, welches insbesondere zur Messung des Füllstands von Tankanlagen sowie der Temperatur des Füllgutes dient, besitzt eine Nachführeinrichtung mit einem Schwimmer außerhalb eines Meßrohrs, um einen zylinderförmigen Reflektor in dem Meßrohr ständig in Höhe des Füllstands zu halten. Der Reflektor besitzt parallel zur Achse des Meßrohrs ein Durchgangsloch. In einem Ende des Meßrohrs ist ein erster, und im anderen Ende des Meßrohrs ein zweiter Ultraschall-Sender/Empfänger angeordnet. Das Durchgangsloch im Reflektor ermöglicht die Messung der Ausbreitungsgeschwindigkeit von Ultraschallsignalen, die entweder durch das Durchgangsloch des Reflektors hindurchtreten oder am Reflektor reflektiert werden.

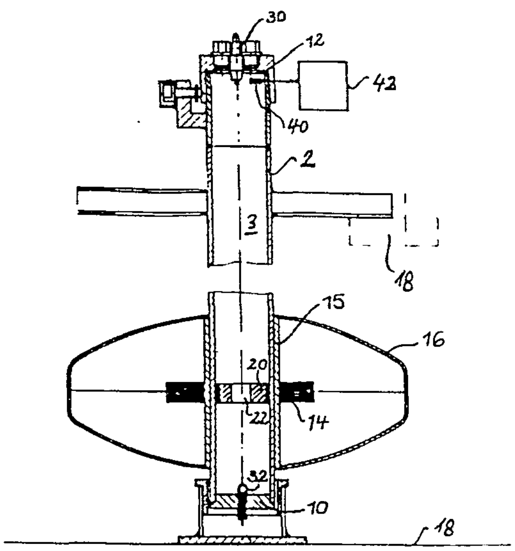


FIG 1

EP 0 024 589 A2

# Beschreibung

Die Erfindung betrifft ein Längen- und Temperaturmeßgerät, insbesondere für Tankanlagen od.dgl., mit einem Meßrohr, einer Nachführeinrichtung um das Meßrohr zur Nachführung eines im Meßrohr verschiebbaren zylinderförmigen Reflektors und mit einem ersten Ultraschall-Sender/Empfänger in einem Ende des Meßrohres.

Ein derartiges Gerät ist bekannt und mißt die Ausbreitungszeit, die Ultraschallsignale benötigen, um vom Ultraschall-Sender/Empfänger bis zum Reflektor, und anschließend zurück zum Ultraschall-Sender/Empfänger zu laufen. Aus der gemessenen Ausbreitungszeit läßt sich die Ausbreitungsstrecke, insbesondere also das Höhenniveau des Reflektors als ein Maß für den jeweiligen Füllstand innerhalb eines Tanks berechnen, sofern die in der Ausbreitungsstrecke herrschende Temperatur bekannt ist. Alternativ läßt sich bei bekannter Ausbreitungsstrecke eine innerhalb des Meßrohrs herrschenden mittlere Temperatur ermitteln.

Die Temperatur im Meßrohr ist jedoch, insbesondere in Abhängigkeit von dem Tankinhalt und der jeweiligen Füllstandshöhe, erheblichen zeitlichen und örtlichen Schwankungen unterworfen, so daß die Annahme einer allzeit konstanten,vorgegebenen Temperatur zu falschen Ergebnissen bei der Längen- bzw. Zustandsmessung führt. Da der Füllstand in der Regel schwankt und insbesondere auch temperaturabhängig ist, da also die Länge der Ausbreitungsstrecke in der Regel nicht bekannt ist, eignet sich dieses Gerät nur wenig zu einer genaueren Temperaturermittlung.

Aufgabe der Erfindung ist es demgegenüber, ein Meßgerät der eingangs genannten Art derart weiterzubilden, daß eine genaue Längenmessung, insbesondere Füllstandsmessung in Tanks oder dergleichen, und eine genaue Messung der mittleren Temperatur einfach und zuverlässig möglich ist.

Diese Aufgabe wird bei dem Gerät der eingangs genannten Art erfindungsgemäß dadurch gelöst, daß der Reflektor parallel zur Achse des Meßrohrs ein Durchgangsloch besitzt, und daß im anderen Ende des Meßrohrs ein zweiter Ultraschall-Sender/Empfänger angeordnet ist.

Die Vorteile der Erfindung liegen insbesondere darin, daß der im Meßrohr verschiebbare, von der Nachführeinrichtung nachführbare Reflektor für die Ultraschallsignale ein Durchgangsloch besitzt, und daß innerhalb des Meßrohrs neben der in Reflexion gemessenen Meßstrecke zwischen dem ersten Sender/Empfänger und dem Reflektor eine weitere Eichstrecke ausgebildet ist, die vom ersten Sender/Empfänger durch das Durchgangsloch des Reflektors hindurch bis zum zweiten Sender/Empfänger am anderen Ende des Meßrohrs reicht und eine bekannte Länge besitzt. Es ist dadurch möglich, in ein und demselben Meßrohr vor jeder Längenmessung zwischen einem Sender/Empfänger und dem Reflektor eine Eichmessung durchzuführen, um zuerst eine mittlere Ausbreitungsgeschwindigkeit bzw. eine mittlere Temperatur innerhalb des Meßrohres als Ergebnis der Eichmessung zu bestimmen. Anschließend läßt sich dann - unter Verwendung der während der Eichmessung gewonnenen mittleren Ausbreitungsgeschwindigkeit oder Temperatur - die Messung der Länge zwischen einem Sender/Empfänger und dem Reflektor im Reflexionsbetrieb vornehmen. Sofern erwünscht, läßt sich dann in einem dritten Schritt - unter Verwendung der im zweiten Schritt gemessenen Lage des Reflektors die mittlere Ausbreitungsgeschwindigkeit oder Temperatur zwischen dem Reflektor und dem anderen Sender/Empfänger messen bzw. berechnen.

Gemäß einer besonders bevorzugten Ausführungsform der Erfindung ist das Meßrohr vertikal angeordnet. Die Nachführeinrichtung ist als Magnetschwimmer ausgebildet, der einen das Meßrohr umgebenden Ringmagneten besitzt. Der zylinderförmige Reflektor ist magnetisiert und vom Magneten des Magnetschwimmers auf den jeweiligen Füllstand nachführbar, auf den sich der Magnetschwimmer und sein Magnet befindet. Diese Anordnung gestattet nach der Eichmessung im zweiten Meßschritt die genaue Bestimmung des Füllstands und anschließend im dritten Meßschritt, nachdem der Füllstand gemessen ist, die genaue Bestimmung der mittleren Temperatur in dem unterhalb des Reflektors liegenden Abschnitt des Meßrohrs, die bei einer guten Wärmeleitfähigkeit des Meßrohrmaterials gleich der mittleren Temperatur der Tankfüllung ist. Neben dem Füllstand stellt die mittlere Temperatur der Tankfüllung eine wesentliche Größe dar, um den Tankinhalt ermitteln und auf eine vorgegebene Referenztemperatur umrechnen zu können.

Bevorzugt fluchten der erste Ultraschall-Sender/Empfänger in dem einen Ende des Meßrohrs, das Durchgangsloch des Reflektors und der zweite Ultraschall-Sender/Empfänger am anderen Ende des Meßrohrs miteinander, um eine möglichst geradlinige und direkte Eichstrecke herzustellen und dadurch einen möglichst großen Anteil der ausgesendeten Ultraschallsignale zu empfangen. Das Meßrohr besitzt bevorzugt einen kreisrunden Querschnitt, und das Durchgangsloch ist bevorzugt zentrisch im Sektor angeordnet.

Das Meßrohr ist bevorzugt doppelwandig ausgebildet, um den Einfluß der Temperaturverteilung der Umgebung auf die Temperaturverteilung im Inneren des Meßrohrs möglichst gering zu halten. Zwischen Innenrohr und Außenrohr lassen sich dann bevorzugt die Anschlußleitungen für den zweiten Ultraschallsender/Empfänger hindurchführen.

Die um das Meßrohr vorliegende Temperaturverteilung ist in aller Regel dadurch gekennzeichnet, daß die flüssige Tankfüllung im unteren Bereich des Meßrohres, und das gasförmige Umgebungsmedium im oberen Bereich des Meßrohres eine bestimmte Temperatur besitzen. Um sicherzustellen, daß sich dieser Temperaturunterschied in der Wandung des Innenrohrs und im Innenraum des Meßrohrs möglichst linear ausgleicht, wird das Innenrohr des Meßrohrs bevorzugt aus einem Metall hoher Wärmeleitfähigkeit, z.B. Kupfer, hergestellt. Es ist dadurch möglich, wie noch erläutert wird, bei der Ermittlung des Füllstandes eine derartige lineare Temperaturverteilung im Rohrinnern korregierend zu berücksichtigen.

Alternativ läßt sich das Meßrohr aus einem Material schlechter Wärmeleitfähigkeit herstellen. Dies ist z.B. dann vorteilhaft, wenn der betreffende Tank relativ klein ist und schnell gefüllt bzw. geleert wird, da dann aufgrund der isolierenden Eigenschaften des Meßrohrs unmittelbar nach dem Füllen bzw. dem Leeren des Tanks noch die vor dem Füllen bzw. Leeren vorhandene homogene Temperaturverteilung im Meßrohr vorhanden ist, die zur Bestimmung der Füllstandshöhe des vollen Tanks bzw. einen weitgehend geleerten Tanks vorteilhaft ist.

Bevorzugt ist in einem Ende des Innenrohrs ein Temperaturfühler mit nachgeschaltetem Temperaturmeßkreis vorgesehen, um die örtliche Temperatur in diesem Ende des Meßrohrs zu messen. Es ist dann möglich, mit diesem Temperaturmeßwert und dem aus der Eichmessung ermittelten mittleren Temperaturwert den linearen Temperaturverlauf innerhalb des Meßrohrs zu bestimmen und bei der Messung des Füllstands korrigierend - etwa durch Berücksichtigung einer entsprechend ortsvarianten Ausbreitungsgeschwindigkeit zu berücksichtigen.

Sofern das erfindungsgemäße Gerät nur zur Messung des Füllstandes eingesetzt werden soll, läßt sich alternativ auch das Innenrohr des doppelwandigen Meßrohrs als dünnwandiges Doppelrohr aus einem Wärme gut leitenden Metall, z.B. Kupfer ausbilden, das zwischen seiner Innenwand und seiner Außenwand ein Kältemittel, z.B. Fregen aufnimmt. Das Innenrohr arbeitet dann als "heat pipe", das längs seiner gesamten Länge eine im wesentlichen konstante Temperatur besitzt, wodurch sich die durch lineare Temperaturverteilung ansonsten möglicherweise erforderliche Korrektur längs des Meßrohres erübrigt.

Das Meßrohr wird bevorzugt gasdicht verschlossen, um den Einfluß der Meßrohrumgebung auf die Messung innerhalb des Rohres möglichst gering zu halten.

Bei Sendebetrieb gibt der erste bzw. zweite Ultraschall-Sender/Empfänger bevorzugt eine vorgegebene Zahl von Ultraschallimpulsen ab. Der Sender/Empfänger am anderen Ende des Meßrohrs wird bei der Eichmessung, und der Empfangsteil des ersten bzw. zweiten Ultraschall-Senders/Empfängers bei der Füllstandsmessung von einer Triggerschaltung während eines vorgegebenen Zeitfensters oder Zeitintervalls in den empfangsbereiten Zustand getriggert. Außerdem wird zur Messung der Ausbreitungszeiten der Ultraschallsignale ein Zähler von der Triggerschaltung bei Beginn des Sendebetriebs in den zählbereiten Zustand gesetzt. Dieser Zähler zählt solange frequenzkonstante Taktimpulse von einem Taktgenerator, bis das Signal die Eichstrecke durchlaufen hat.

Dem Empfangsteil des ersten und des zweiten Ultraschallsenders/Empfängers ist je eine Logikschaltung nachgeschaltet, die ein empfangenes Signal nur dann zur Weiterverarbeitung weiterleitet, wenn während des vorgegebenen

Zeitfensters ebensoviel Ultraschallimpulse empfangen wurden wie ausgestrahlt worden sind. Werden während des Zeitfensters weniger Ultraschallimpulse gezählt, so wird diese Messung negiert.

Erfindungsgemäß geht jede Füllstandsmessung mit einer Eichmessung einher. Während der Füllstandsmessung wird diejenige Ausbreitungszeit gemessen, die das Ultraschallsignal benötigt, um von einem der Sender/Empfänger bis zum Reflektor und wieder zurück zu demselben Sender/Empfänger zu gelangen, wobei der Empfangsteil des Senders/Empfängers denjenigen Teil des Ultraschallsignals empfängt, der an der Reflektoroberfläche reflektiert wird.

Während der Eichmessung wird diejenige Ausbreitungszeit gemessen, die das Ultraschallsignal zum Durchlaufen der Eichstrecke bekannt er Länge benötigt. Aus der während der Eichmessung gemessenen Ausbreitungszeit bestimmt ein Rechner, der dem Zeitmessungszähler nachgeschaltet ist, die mittlere Ausbreitungsgeschwindigkeit und die mittlere Temperatur im Meßrohr. Anschließend bestimmt der Rechner aus der während der Füllstandsmessung gemessenen Ausbreitungszeit und der mittleren Ausbreitungsgeschwindigkeit die gesuchte Länge der Ausbreitungsstrecke, die ein Maß für den Füllstand der Flüssigkeit in der Tankanlage ist.

Bevorzugt wird dem Rechner vom Temperaturfühler periodisch der gemessene Temperaturwert zugeführt. Aus dem während der Eichmessung bestimmten mittleren Temperaturwert und dem Temperaturwert, der an einem Ende des Meßrohrs gemessen wurde, berechnet der Rechner eine lineare Temperaturverteilung längs des Meßrohrs, die bei einem nach außen gut isolierten doppelwandigen Meßrohr, dessen Innenrohr gut wärmeleitend ist, den tatsächlichen Verhältnissen im Meßrohr relativ genau Rechnung trägt. Anschließend berechnet der Rechner eine der ermittelten linearen Temperaturverteilung entsprechende örtliche Geschwindigkeitsverteilung längs des Meßrohrs und bestimmt dann unter Zugrundelegung dieser Geschwindigkeitsverteilung aus der bei der Füllstandsmessung gemessenen Ausbreitungszeit den Füllstand.

Wird die Messung des Füllstands mit dem ersten Sender/Empfänger durchgeführt, der über dem Reflektor angeordnet ist, und wird insbesondere der Füllstand unter Berücksichtigung des am oberen Ende gemessenen Temperaturwerts und der entsprechenden linearen Temperaturverteilung bestimmt, so wird der Füllstand sehr genau ermittelt. Erfindungsgemäß läßt sich nun anschließend in einem dritten Meßschritt - und unter Verwendung des zuvor ermittelten Füllstandes - der zweite Sender/Empfänger in einen Sendebetrieb und einem anschließenden Empfangsbetrieb nehmen, und die Ausbreitungszeit ermitteln, welche Ultraschallsignale vom zweiten Sender/Empfänger bis zum Reflektor benötigen. Aus dieser dritten Messung läßt sich dann die mittlere Temperatur berechnen, die zwischen dem unteren Ende des Meßrohrs und dem Reflektor vorliegt und bei hoher Wärmeleitfähigkeit des Meßrohrs gleich der mittleren Temperatur der Tankfüllung ist.

Gemäß einer bevorzugten Ausführungsform der Erfindung lassen sich von dem Rechner und der vom Rechner gesteuerten Triggerschaltung seriell mehrere Meßrohre in mehreren Tanks abfragen und die jeweiligen Füllstände anzeigen. Die vom Rechner ermittelten Füllstände lassen sich auf einem elektronischen Zähler zur Anzeige bringen. Alternativ ist auch eine Anzeige auf einem Monitor möglich.

Im folgenden wird ein Ausführungsbeispiel der Erfindung anhand der Zeichnung näher erläutert. Es zeigen:

Fig. 1 eine Seitenansicht des Meßrohrs des erfindungsgemäßen Geräts im Schnitt;

Fig. 2 einen Schnitt durch ein doppelwandiges Meßrohr, das anstelle des einwandigen Meßrohrs der Fig. 1 einsetzbar ist; und

Fig. 3 ein Blockschaltbild des erfindungsgemäßen Geräts.

Fig. 1 zeigt eine Seitenansicht des Meßrohrs 2 des erfindungsgemäßen Geräts 1 im Querschnitt. Das Meßrohr 2 ist vertikal in einem Tank 18 eingebaut. Ein Magnetschwimmer 14, 16 umgibt das Meßrohr 2 mit einer Hülse 15, die mit dem Auftriebskörper 16 verbunden ist. An der Hülse 15 ist in Höhe des Eintauchniveaus ein Magnet 14 angeordnet, der in den Auftriebskörper 16 hineinragt. Im Meßrohr 2 ist ein zylinderförmiger Reflektor 20 aus magnetisiertem oder magnetisierbarem Material verschiebbar angeordnet und wird von dem Magneten 14 des Magnetschwimmers 14, 16 ständig auf dem jeweiligen Füllstand des Tanks 18 gehalten.

Das Meßrohr 2 besitzt einen kreisrunden Querschnitt. Der Reflektor 20 besitzt die Form eines Kreiszylinders, dessen Zylinderfläche mit geringem Spiel längs der Innenwand des Meßrohrs 2 verschiebbar ist. Im Reflektor 20 ist zentrisch und parallel zur Zylinderachse ein Durchgangsloch 22 angeordnet.

In der oberen Endwand 12 des Meßrohrs 2 ist koaxial zur Achse des Meßrohrs der Geber 30 eines ersten Ultraschall-Senders/Empfängers angeordnet, der im folgenden als erster Ultraschall-Sender/Empfänger 30 bezeichnet ist. In der unteren Endwand 10 des Meßrohrs 2 sitzt mit dem ersten Ultraschall-Sender/Empfänger 30 und dem Durchgangsloch 22 fluchtend der Geber 32 eines zweiten Ultraschall-Senders/ Empfängers, im folgenden als zweiter Ultraschall-Sender/ Empfänger 32 bezeichnet.

Im oberen Ende des Meßrohrs 2 ist ferner ein Temperaturfühler 40 mit einem nachgeschalteten Temperaturmeßkreis 42 angeordnet, der die Temperatur an dieser Stelle des Meßrohrs mißt.

Fig. 2 zeigt den Querschnitt eines doppelwandigen Meßrohres 2, das sich anstelle des in Fig. 1 verwendeten einwandigen Meßrohres zur Füllstandsmessung verwenden läßt. Das Meßrohr besitzt ein Innenrohr 4 und ein koaxiales, vom Innenrohr beabstandetes Außenrohr 6. Zwischen dem Innenrohr 4 und dem Außenrohr 6 ist eine Isolationsfüllung 8 untergebracht, um den Innenraum 3 des Meßrohres von Einflüssen der Außentemperatur und deren Veränderungen abzuschirmen. Zwischen dem Innenrohr 4 und dem Außenrohr 6 sind auch die Anschlußleitungen für den zweiten Ultraschall-Sender/ Empfänger 30 geführt. Das Innenrohr 4 besteht aus einem Metall hoher Wärmeleitfähigkeit, z.B. Kupfer, damit die Wand des Innenrohres 4 im wewentlichen eine lineare Temperaturverteilung aufweist und von außen herangetragene örtliche Temperaturverteilungen in sich ausgleicht. Alternativ läßt sich das Innenrohr 4 als Doppelrohr mit einer dünnen Innenwand und einer dünnen Außenwand ausbilden. Zwischen Innenwand und Außenwand wird ein Kältemittel, z.B. Frigen etc. eingefüllt, das die Temperatur im Innenraum 3 des Meßrohrs 2 im wesentlichen über die gesamte Rohrlänge konstant hält. Der Innenraum 3 des Meßrohrs 2 ist bei allen Ausführungsformen des Meßrohrs gasdicht mittels den beiden Endwänden 10, 12 abgeschlossen, um zu verhindern, daß die Temperaturverteilung im Innenraum 3 durch Gaseintritt von außen beeinflußt wird.

Fig. 3 zeigt ein Blockschaltbild des erfindungsgemäßen Füllstandsmeßgeräts. Der erste Ultraschall-Sender/Empfänger 30, dessen Geber im oberen Ende des Meßrohrs 2 eingebaut ist,und der zweite Ultraschall-Sender/Empfänger 32, dessen Geber im unteren Ende des Meßrohres 2 angeordnet ist, arbeiten auf je eine Logikschaltung 34, 36, deren Ausgang mit dem Eingang eines Zählers 38 verbunden ist. Der erste und der zweite Ultraschall-Sender/Empfänger 30 und 32 und der Zähler 38 und ein an den Zähler 38 angeschlossener Taktgenerator 48 werden von einer Triggerschaltung 44 gesteuert, die ihrerseits von einem Rechner 46 gesteuert wird. Der Zähler ist ebenfalls mit dem Rechner 46 verbunden, der einen Speicher zur Speicherung von Meßergebnissen enthält. Zähler 32, Taktgenerator 48 und Triggerschaltung 44 können auch integral im Rechner enthalten sein.

Dem Rechner 46 benachbart ist ein Monitor 52 angeordnet, der mit dem Rechner 46 verbunden ist und die Rechenergebnisse etc. bei Bedarf anzeigt. In der Nähe des Meßrohrs 2 ist ferner noch eine Füllstandsanzeige 50, bevorzugt ein Anzeigezähler, angeordnet und zeigt den vom Rechner 46 empfangenen Füllstand an, der in dem betreffenden Meßrohr gemessen wurde.

Zum Auslösen des Eichbetriebs setzt die Triggerschaltung 44 einen der Ultraschall-Sender/Empfänger 30,32 in Empfangsbetrieb und verbindet den Taktgenerator 48 mit dem Zähleingang des Zählers 38. Mit dem Einsetzen des Sendebetriebs zählt der Zähler 38 vom Taktgenerator 48 gelieferte Taktimpulse und der sendende Ultraschall-Sender/Empfänger gibt eine vorgegebene Zahl von Ultraschall-Impulsen ab, die der andere Ultraschall-Empfänger am anderen Ende des Meßrohrs 2 empfängt. Erfolgt der Empfang aller Ultraschall-Impulse innerhalb eines von der Triggerschaltung 44 vorgegebenen Zeitfensters, so wird das zwischen Aussendung und Empfang der Ultraschall-Impulse vom Zähler 38 ausgezählte Zeitintervall an den Rechner 46 abgegeben und dort zur Berechnung der mittleren Temperatur im Meßrohr verwendet.

Anschließend wird auf Füllstand-Meß-Betrieb umgeschaltet, der zweite Sender/Empfänger 32 wird ausgeschaltet, und der Zähler 38 mit dem Aussenden von Ultraschall-Impulsen durch den Ultraschall-Sender/Empfänger 30 in den zählbereiten Zustand getriggert. Nach Aussendung der Ultraschall-Impulse wird der Sender/Empfänger 30 von der Triggerschaltung 44 rechnergesteuert ein vorgegebenes Zeitfenster lang auf Empfangsbetrieb umgeschaltet, um die vom Reflektor20 reflektierten Ultraschall-Impulsanteile empfangen zu können. Das zwischen Aussendung und Empfang der Ultraschall-Impulse verstrichene Zeitintervall wird vom Zähler 38 gemessen und dann von der Logikschaltung 34 an den Rechner 46 weitergegeben, wenn der Empfang aller Impulse innerhalb des vorgegebenen Zeitfensters erfolgt.

Der Rechner 46 berechnet aus der während der Eichmessung gemessenen Ausbreitungszeit die mittlere Ausbreitungsgeschwindigkeit und die mittlere Temperatur im Innenraum 3 des Meßrohrs 2. Aus der während einer Füllstandsmessung gemessenen Ausbreitungszeit berechnet der Rechner anschließend unter Verwendung der berechneten mittleren Ausbreitungsgeschwindigkeit die gesuchte Ausbreitungsstrecke, die ein Maß für den Füllstand der Flüssigkeit in der Tankanlage darstellt.

Darüber hinaus ist dem Rechner 46 der von der Temperaturmeßschaltung 40, 42 gemessene Temperaturwert im oberen Ende des Meßrohres 2 zuführbar. Der Rechner 46 berechnet dann aus dem bei der Eichmessung ermittelten mittleren Temperaturwert und dem im oberen Ende gemessenen Temperaturwert eine lineare Temperaturverteilung längs des Meßrohrs, eine der linearen Temperaturverteilung entsprechende örtliche Geschwindigkeitsverteilung, und unter Zugrundelegung dieser Geschwindigkeitsverteilung und der während einer Füllstandsmessung gemessenen Ausbereitungszeit den Füllstand des Tanks.

In einem dritten Meßschritt läßt sich im Anschluß an eine Füllstandsmessung der untere, zweite Sender/Empfänger 32 im Reflexionsbetrieb betreiben und die Ausbreitungszeit messen, welche das Ultraschallsignal vom zweiten Sender/Emfpänger 32 bis zum Reflektor 20 - und wieder zurück - benötigt. Aus diesem Meßwert berechnet dann der Rechner 46 - unter Verwendung des im zweiten Meßschritt berechneten Füllstandes - die mittlere Temperatur innerhalb des zwischen Reflektor und zweitem Sender/Empfänger 32 liegenden Meßrohr-Abschnitts, d.h. die mittlere Temperatur innerhalb der Tankfüllung.

Die Kenntnis des Füllstandes und der mittleren Temperatur der Tankfüllung ermöglicht unter Zuhilfenahme der Auslitertabelle des betreffenden Tanks die Bestimmung des im Tank enthaltenen Flüssigkeitsvolumens, bzw. Flüssigkeitsgewichts, das sich auf eine durch Zollvorschriften etc. vorgegebene Referenztemperatur umrechnen läßt.

EISENFÜHR & SPEISER

BREMEN

PATENTANWÄLTE
DIPL.-ING. GÜNTHER EISENFÜHR
DIPL.-ING. DIETER K. SPEISER
DR. RER. NAT. HORST ZINNGREBE
DR.-ING. WERNER W. RABUS

UNS. ZEICHEN: R 243
ANMELDER/INH: Rapp
AKTENZEICHEN: Neuanmeldung

DATUM: 5. August 1980

Eugen Rapp, Tilsiter Straße 12, 2805 Stuhr II

---

Längen- und Temperaturmeßgerät, insbesondere für Tankanlagen od.dgl.

---

Ansprüche

1. Längen- und Temperaturmeßgerät, insbesondere für Tankanlagen od.dgl., mit einem Meßrohr, einer Nachführeinrichtung um das Meßrohr zur Nachführung eines im Meßrohr verschiebbaren zylinderförmigen Reflektors und mit einem ersten Ultraschall-Sender/Empfänger in einem Ende des Meßrohres, dadurch gekennzeichnet, daß der Reflektor (20) parallel zur Achse des Meßrohrs (2) ein Durchgangsloch (22) besitzt, und daß im anderen Ende des Meßrohrs (2) ein zweiter Ultraschall-Sender/Empfänger (32) angeordnet ist.

2. Längen- und Temperaturmeßgerät nach Anspruch 1, insbesondere zur Messung des Füllstands und der mittleren

WWR/gs

Temperatur einer Füllung, dadurch gekennzeichnet, daß das Meßrohr (2) vertikal angeordnet ist, daß die Nachführeinrichtung (14,15,16) als Magnetschwimmer um das Meßrohr (2) ausgebildet ist, und daß der zylinderförmige Reflektor (20) magnetisiert ist und vom Magneten (14) des Magnetschwimmers (14,15,16) auf den jeweiligen Füllstand nachführbar ist.

3. Längen- und Temperaturmeßgerät nach Anspruch 1 oder 2, dadurch gekennzeichnet, daß der erste Ultraschall-Sender/Empfänger (30) in dem einen Ende des Meßrohrs (2), das Durchgangsloch (22) des Reflektors (20) und der Ultraschall-Empfänger (30) untereinander fluchten.

4. Längen- und Temperaturmeßgerät nach Anspruch 1 oder 3, dadurch gekennzeichnet, daß das Durchgangsloch (22) zentrisch im Reflektor (20) angeordnet ist.

5. Längen- und Temperaturmeßgerät nach einem der Ansprüche 1 bis 4, dadurch gekennzeichnet, daß das Meßrohr (2) doppelwandig ausgebildet ist und zwischen dem Innenrohr (4) und dem Außenrohr (6) eine Isolationsfüllung (8) besitzt und die Anschlußleitungen für den Ultraschall-Empfänger (30) am unteren Ende des Meßrohrs aufnimmt.

6. Längen- und Temperaturmeßgerät nach Anspruch 5, dadurch gekennzeichnet, daß das Innenrohr (4) aus einem Metall hoher Wärmeleitfähigkeit besteht.

7. Längen- und Temperaturmeßgerät nach Anspruch 5, dadurch gekennzeichnet, daß das Innenrohr (4) aus einem Material schlechter Wärmeleitfähigkeit besteht.

8. Längen- und Temperaturmeßgerät nach Anspruch 6, dadurch gekennzeichnet, daß das Innenrohr (4) doppelwandig ausgebildet ist und zwischen seiner Innenwand und seiner Außenwand eine Kühlmittelfüllung besitzt.

9. Längen- und Temperaturmeßgerät nach einem der Ansprüche 5 bis 8, dadurch gekennzeichnet, daß in einem Ende des Innenrohrs (4) ein Temperaturfühler (40) mit nachgeschaltetem Temperaturmeßkreis (42) vorgesehen ist.

10. Längen- und Temperaturmeßgerät nach einem der Ansprüche 5 bis 8, dadurch gekennzeichnet, daß ein Temperaturfühler auf dem Reflektor (20) angeordnet ist und mit dem Temperaturmeßkreis (42) verbunden ist.

11. Längen- und Temperaturmeßgerät nach einem der vorstehenden Ansprüche, dadurch gekennzeichnet, daß das Meßrohr (2) gasdicht verschlossen ist.

12. Längen- und Temperaturmeßgerät nach einem der vorstehenden Ansprüche, dadurch gekennzeichnet, daß in einem ersten Schritt (Eichmessung) der erste Ultraschall-Sender/Empfänger (30) im Sendebetrieb eine vorgegebene Zahl von Ultraschall-Impulsen abgibt, die der zweite Ultraschall-Sender/Empfänger (32) am anderen Ende des Meßrohrs (2) empfängt, daß in einem zweiten Schritt (Füllstandsmeßung) der erste Ultraschall-Sender/Empfänger (30) eine vorgegebene Zahl von Ultraschall-Impulsen abgibt und anschließend die am Reflektor (20) reflektierten Impulse während eines vorgegebenen Zeitfensters empfängt, und daß ein Zähler (38) von der Triggerschaltung (44) jeweils bei Beginn des Sendebetriebs des ersten Ultraschall-Sender/Empfängers (30) zählbereit gesetzt wird und zur Zeitmessung solange Taktimpulse von einem Taktgenerator zählt, bis ein Signal vom zweiten bzw. ersten Ultraschall-Sender/Empfänger (32,30) empfangen wird und den Zählbetrieb abschaltet.

13. Längen- und Temperaturmeßgerät nach Anspruch 12, dadurch gekennzeichnet, daß dem Empfangsteil des ersten und des zweiten Ultraschall-Senders/Empfängers (30,32) je eine Logikschaltung (34,36) nachgeschaltet ist, die den Zählerstand des Zählers (38) zur Weiterverarbeitung nur dann an einen Rechner (46) abgibt, wenn die während des vorgegebenen Zeitfensters empfangene Zahl der Ultraschall-Impulse gleich der gesendeten Azahl an Ultraschall-Impulsen ist.

14. Längen- und Temperaturmeßgerät nach Anspruch 13, dadurch gekennzeichnet, daß die Logikschaltung (34,36) ein Alarmsignal auslöst, wenn eine vorgegebene Zeit nach dem Aussenden keine entsprechenden Ultraschall-Impuse empfangen sind.

15. Längen- und Temperaturmeßgerät nach einem der Ansprüche 12-14, dadurch gekennzeichnet, daß in einem dritten Schritt der zweite Ultraschall-Sender/Empfänger (32) im Sendebetrieb Ultraschall-Impulse abgibt und anschließend im Empfangsbetrieb die am Reflektor (20) reflektierten Ultraschall-Impuse empfängt, und daß der Zähler (38) die Ausbreitungszeit der Ultraschall-Impulse auszählt.

16. Längen- und Temperaturmeßgerät nach Anspruch 12 bis 14, dadurch gekennzeichnet, daß der Rechner (46) aus der während dem ersten Schritt gemessenen Ausbreitungszeit die mittlere Ausbreitungsgeschwindigkeit und die mittlere Temperatur im Meßrohr (2) berechnet, und daß der Rechner (46) aus der im ersten Schritt gewonnenen mittleren Ausbreitungsgeschwindigkeit und der im zweiten Schritt gemessenen Ausbreitungszeit die Ausbreitungsstrecke des zweiten Schritts berechnet, die ein Maß für den Füllstand der Flüssigkeit in der Tankanlage darstellt.

17. Längen- und Temperaturmeßgerät nach Anspruch 16, dadurch gekennzeichnet, daß der Rechner (46) aus dem im zweiten Schritt ermittelten Füllstand und der im dritten Schritt gemessenen Ausbreitungszeit die mittlere Ausbreitungsgeschwindigkeit zwischen zweitem Ultraschall-Sender/Empfänger (32) und Reflektor (20) und die zugehörige mittlere Temperatur berechnet.

18. Längen- und Temperaturmeßgerät nach Anspruch 16 und 17, dadurch gekennzeichnet, daß dem Rechner (46) der von der Temperaturmeßschaltung (40,42) gemessene Temperaturmeßwert zuführbar ist, daß der Rechner (46) aus dem im ersten Schritt ermittelten mittleren Temperaturwert innerhalb des Meßrohrs und dem am Temperaturfühler (40) gemessenen Temperaturwert eine lineare Temperaturverteilung längs des Meßrohrs (2) berechnet, daß der Rechner (46) eine der berechneten linearen Temperaturverteilung längs des Meßrohrs entsprechende örtliche Geschwindigkeitsverteilung berechnet und unter Zugrundelegung dieser Geschwindigkeitsverteilung bei der Füllstandsmessung den Füllstand bestimmt.

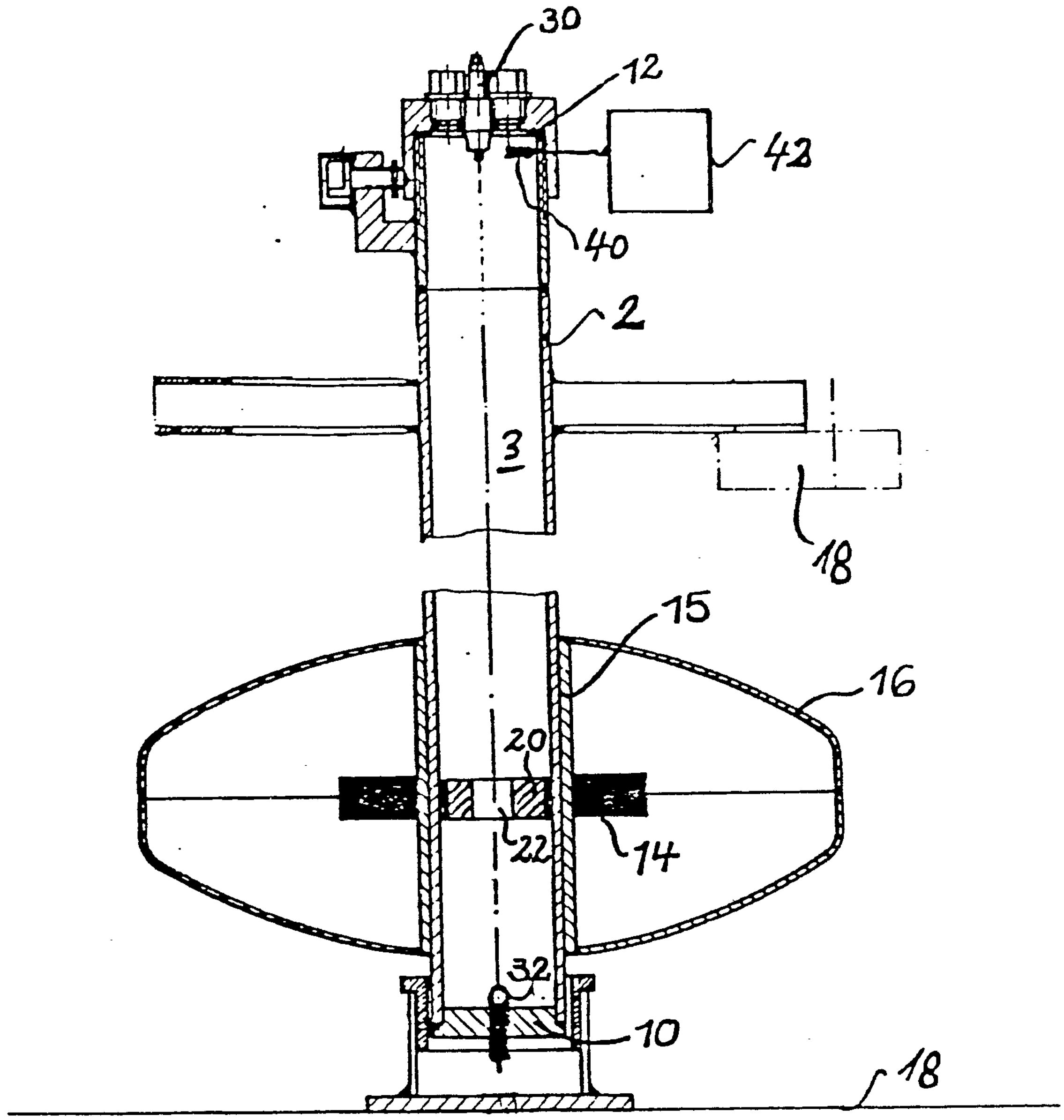


FIG. 1

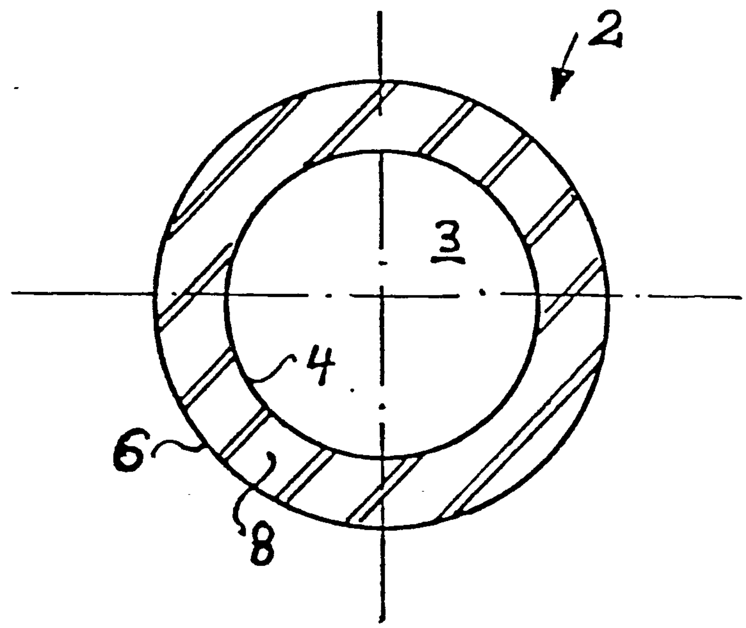


FIG. 2

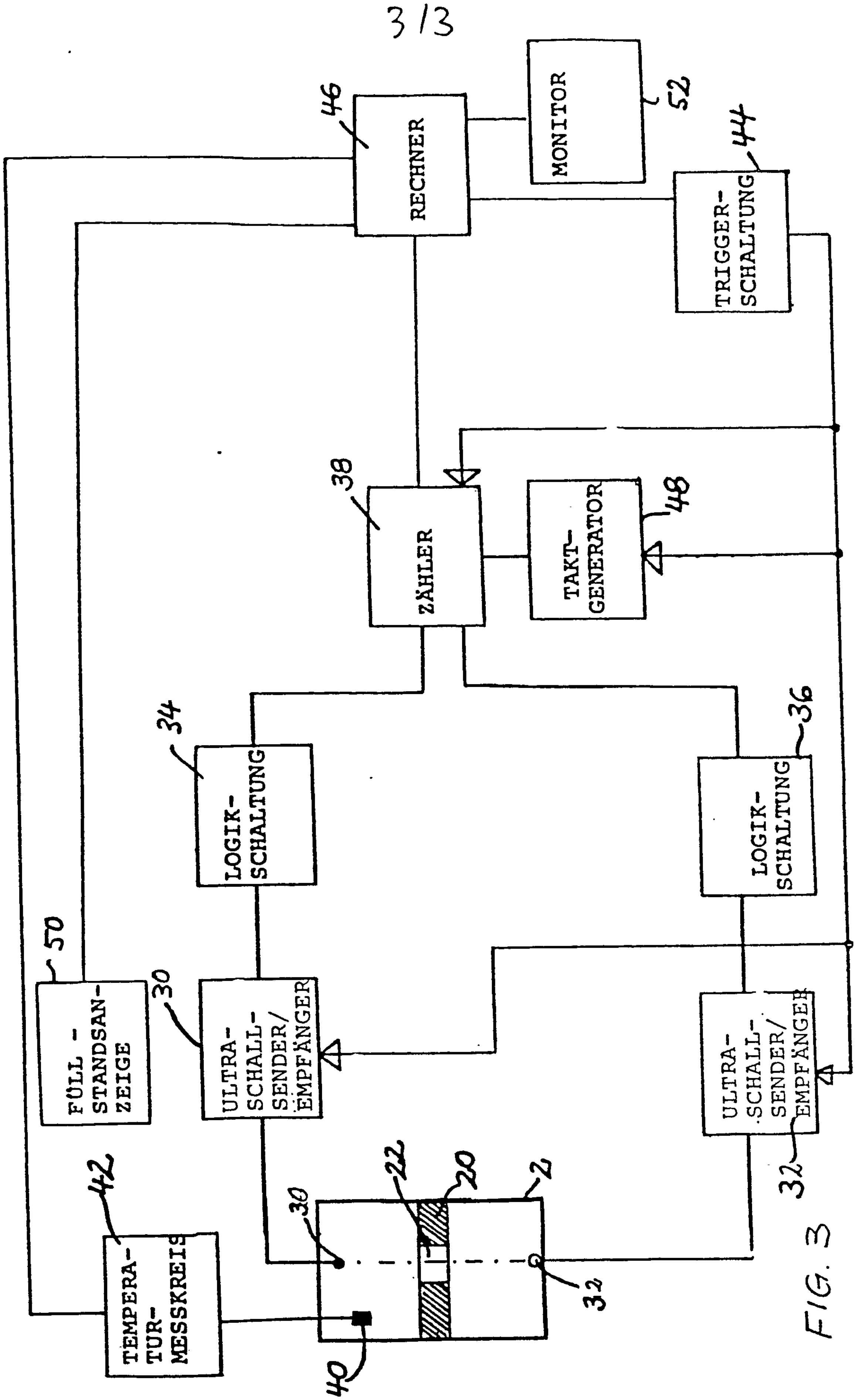
RECHNER
46
MONITOR
52
TRIGGER-SCHALTUNG
44
ZÄHLER
38
TAKT-GENERATOR
48
LOGIK-SCHALTUNG
34
LOGIK-SCHALTUNG
36
FÜLL-STANDSAN-ZEIGE
50
ULTRA-SCHALL-SENDER/EMPFÄNGER
30
ULTRA-SCHALL-SENDER/EMPFÄNGER
32
TEMPERA-TUR-MESSKREIS
42
40
30
22
20
2
32

FIG. 3